# EUROPÄISCHE PATENTSCHRIFT

(11) **EP 0 807 132 B1**
(45) Veröffentlichungstag und Bekanntmachung des Hinweises auf die Patenterteilung: **10.04.2002**
(21) Anmeldenummer: 96901756.5
(22) Anmeldetag: 23.01.1996
(51) Int. Cl.: C08F 297/04, C08L 53/02, C08J 5/18, B23B 27/08

(54) **FLEXIBLE, TRANSPARENTE FOLIE AUF DER GRUNDLAGE EINES STYROL-POLYMERISATS, INSBESONDERE FÜR DIE LEBENSMITTELVERPACKUNG, SOWIE VERFAHREN ZU DEREN HERSTELLUNG**
FLEXIBLE, TRANSPARENT STYRENE POLYMER-BASED FOIL, IN PARTICULAR FOR FOOD PACKAGING, AND PROCESS FOR ITS PRODUCTION
FEUILLE SOUPLE ET TRANSPARENTE A BASE D'UN POLYMERISAT DE STYRENE, EN PARTICULIER POUR L'EMBALLAGE DE PRODUITS ALIMENTAIRES, ET SON PROCEDE DE PRODUCTION

(30) Priorität: 02.02.1995 DE 19503326
(43) Veröffentlichungstag der Anmeldung: 19.11.1997
(73) Patentinhaber: BASF AKTIENGESELLSCHAFT, 67056 Ludwigshafen (DE)
(72) Erfinder: NIESSNER, Norbert, D-67159 Friedelsheim (DE); KNOLL, Konrad, D-67069 Ludwigshafen (DE); NAEGELE, Paul, D-67166 Otterstadt (DE); BETZ, Walter, D-67071 Ludwigshafen (DE); BÜSCHL, Rainer, D-67459 Böhl-Iggelheim (DE); KATHMANN, Jens-Otto, D-67063 Ludwigshafen (DE); SKUPIN, Gabriel, D-67346 Speyer (DE)
(86) Internationale Anmeldenummer: EP9600261
(87) Internationale Veröffentlichungsnummer: WO9623823

(56) Entgegenhaltungen:
- EP-A- 0 603 852
- WO-A-95/35335
- FR-A- 2 705 053
- US-A- 4 089 913
- US-A- 4 112 158
- US-A- 4 603 155

## Beschreibung

Die Erfindung betrifft eine Folie, insbesondere für die Lebensmittelverpackung, aus einer Polymer mischung enthaltend
- P1:: 1 bis 99 Gew. % eines kautschukelastischen Blockcopolymerisats P1, das
α) mindestens zwei Blöcke S, die einpolymerisierte Einheiten eines vinylaromatischen Monomeren und eine Glastemperatur über 25°C aufweisen und
β) mindestens einen, zwischen den Blöcken S befindlichen, elastomeren Block B/S, der sowohl einpolymerisierte Einheiten eines vinylaromatischen Monomeren (S) als auch eines Diens (B) enthält, mit statistischem Aufbau und einer Glastemperatur Tg von unter 25°C,
enthält
und wobei die im Festkörper aus den Blöcken S gebildete Hartphase 10 - 40 Vol.-%, und die aus den Blöcken B/S gebildete Weichphase 60-90 Vol.-% betragen,
- P2:: 1 bis 99 Gew.-% eines thermoplastisch verarbeitbaren und/oder duroplastischen Polymeren P2.
- P3:: 0 bis 70 Gew.-% weiterer Zusatzstoffe und Verarbeitungshilfsmittel, wobei die Summe der Gewichtsprozente der Komponenten P1 bis P3 100 % ergibt.

Transparente, selbsthaftende, gasdurchlässige Dehnfolien (sog. "Cling"folien) für den Lebensmittelverpackungsbereich sind bekannt und z.B. in JA-A-76 55 352 und JA-A-74 20 254 beschrieben. Die handelsüblichen Folien bestehen in der Regel nach wie vor aus PVC, was die Beseitigung gebrauchter Folien erschwert.

FR-A-2 686 887 und FR-A-2 691 436 beschreiben die Herstellung von Dehnfolien aus einer Mischung von Styrol-Butadien-Styrol-BlockCopolymeren und einem Styrol-Butadien-Kautschuk als Weichphase, der noch Polyisobutylen enthalten kann. Diese Folien haben einerseits gute Rückstelleigenschaften nach Dehnung ("Memory-Effekt") und können selbsthaftend hergestellt werden. Sie haben andererseits aufgrund des hohen Anteils an Butadien (die gesamte Weichphase besteht aus reinen Polybutadien) eine zu geringe Wärmestabilität. Polybutadien ist außerdem leicht vernetzbar: Während eine geringe Vernetzung für die Erzielung des kautschukelastischen Verhaltens der Weichphase notwendig ist, wirken sich die bei zu weitgehender Vernetzung gebildeten Gel-Anteile in der Praxis als sog. Stippen aus. Die Herstellung einer einwandfreien Folie mit dem richtigen Vernetzungsgrad ist daher schwierig.

Wegen dieser Nachteile werden daher zunehmend Folien aus Ethylencopolymeren (meistens mit bis zu etwa 25 % Hexen-1 oder Octen-1 als Comonomeren) als Verpackungsfolien empfohlen. Einige Handelsprodukte dieser Art sind hervorragend thermostabil und daher gut verarbeitbar.

Aufgrund der molekularen Struktur fehlen in dieser Polymerklasse jedoch weitgehend die für die Styrol-Butadien-Styrol-Polymere typischen Vernetzungsstellen, die das thermoplastisch-kautschukartige Verhalten dieser Polymeren, d.h. einen Rückstelleffekt ("Memory-Effekt") nach Dehnbeanspruchung ermöglichen.

Es bestand also die Aufgabe, Polymermaterialien für den Lebensmittelbereich zu finden, die sich zur Herstellung von transparenten, für Gase durchlässigen Dünnfolien eignen, gute Clingeigenschaften (Hafteigenschaften) mit hoher optischer Qualität (d.h. mit niedrigem Stippenanteil) und zugleich einen sehr guten Memory-Effekt aufweisen.

Demgemäß wurden die eingangs definierten Folien gefunden. Bevorzugte Ausführungsformen sind den Unteransprüchen zu entnehmen.

Desweiteren wurde ein Verfahren zur Herstellung einer eine Mischung gemäß den Ansprüchen 1 bis 6 enthaltenden Verpackungsfolie durch Breitschlitzextrusion gefunden. Eine eine Mischung gemäß den Ansprüchen 1 bis 6 enthaltende Folie kann als Verpackungsfolie, insbesondere als Lebensmittelverpackungsfolie, verwendet werden.

Bevorzugt wird ein folienförmiges Coextrudat aus mindestens zwei Schichten beliebiger Dicke, wobei mindestens eine Schicht aus den Komponenten P1 bis P3 gemäß den Ansprüchen 1 bis 6 und insbesondere mindestens eine weitere Schicht aus einem thermoplastisch verarbeiteten Polymeren besteht. Ein solches Coextrudat enthaltend in mindestens einer Schicht als Komponente P2 Polyethylen, Polypropylen, Polyethylenterephthalat, Polybutylterephthalat oder Polyamid, wird besonders bevorzugt.

Erfindungsgemäß hergestellte Folien weisen überraschenderweise die vorstehend als wünschenswert herausgestellten Eigenschaften in hohem Maße auf und können nach der Verwendung ohne Probleme entsorgt werden, da sie bei geeigneter Wahl des Hartbestandteils vollständig zu Kohlendioxid und Wasser verbrannt werden können. Hervorzuheben ist insbesondere die gute Verarbeitbarkeit und Wärmestabilität der erfindungsgemäßen Mischung, was bei einem volumenmäßigen Weichphasenanteil von bis zu mehr als 70 % (wie nachstehend ausgeführt) nicht zu erwarten war, sowie der mögliche Verzicht auf die bei PVC üblichen Weichmacher.

Als Komponente P1) enthalten die erfindungsgemäßen Polymermischungen 1 bis 99 Gew.-% eines kautschukelastischen Blockcopolymerisats P1, das
α) mindestens zwei Blöcke S, die einpolymerisierte Einheiten eines vinylaromatischen Monomeren und eine Glastemperatur über 25°C aufweisen und
β) mindestens einen, zwischen den Blöcken S befindlichen, elastomeren Block B/S, der sowohl einpolymerisierte Einheiten eines vinylaromatischen Monomeren (S) als auch eines Diens (B) enthält, mit statistischem Aufbau und einer Glastemperatur Tg von unter 25°C,
enthält
und wobei die im Festkörper aus den Blöcken S gebildete Hartphase 10 - 40 Vol.-%, und die aus den Blöcken B/S gebildete Weichphase 60-90 Vol.-% betragen,

In erfindungsgemäßen Polymermischungen, welche Thermoplaste als Komponente P2) enthalten, werden Blockcopolymerisate P1 vorzugsweise als Schlagzähmodifier eingesetzt, deren Anteil bis zu 40 Gew.-%, vorzugsweise bis zu 20 Gew.-%, bezogen auf P1) bis P3) betragen kann.

Je nach Anwendung sind jedoch beliebige Mischungsverhältnisse mit der Komponente P2 möglich.

Blockcopolymere von Vinylaromaten (z.B. Styrol) und Dienen (z.B. Butadien) sind Copolymere aus mehreren aneinandergereihten oder in anderer Form verknüpften Polymermolekül-Bereichen (sog. Blökken), die in sich mehr oder weniger einheitlich aufgebaut sind. Sie können je nach Struktur und Gehalt an Dienmonomeren - bei einer bestimmten Temperatur - insgesamt elastomere, d.h. kautschukelastische Eigenschaften oder steife, nicht-kautschukelastische Eigenschaften haben, d.h. sie verhalten sich nach außen hin insgesamt entweder kautschukelastisch, ähnlich wie ein Polydien und haben z.B. als sog. SB-Rubber Bedeutung, oder wie transparente, schlagzähe Styrolpolymere. Es ist üblich, in Anlehnung an die Bezeichnungen beim schlagzäh modifizierten Polystyrol diejenigen Molekülteile, die das kautschukelastische Verhalten bestimmen, als Weichphase und die starren Molekülteile (den reinen Polystyrolanteil) als Hartphase zu bezeichnen. SB-Rubber können nicht wie Thermoplaste verarbeitet werden, sondern müssen wie gewöhnliche Dienpolymere zum Gebrauch vulkanisiert werden, was ihre Verwendung stark einschränkt.

Die zu sog. lebenden Polymeren (living polymers) führende anionische Polymerisation, bei der das Wachstum eines Kettenmoleküls an einem Kettenende stattfindet, das mangels spontaner Kettenabbruch- oder übertragungsreaktion theoretisch beliebig lange lebt (polymerisationsfähig bleibt), und die Umsetzung des lebenden Polymeren mit ein- oder mehrfunktionellen Reaktionspartnern bietet bekanntlich eine vielseitig verwendbare Möglichkeit zum Aufbau von Blockcopolymeren, wobei die Auswahl an Monomeren allerdings beschränkt ist; in der Praxis haben nur Blockcopolymere von vinylaromatischen Verbindungen, also Styrol und seinen Abkömmlingen einerseits und Dienen, im wesentlichen Butadien oder Isopren andererseits Bedeutung erlangt. Blockcopolymere erhält man dadurch, daß jeweils bis annähernd zur Erschöpfung eines Monomerenvorrats polymerisiert und das oder die Monomeren dann gewechselt werden. Dieser Vorgang ist mehrfach wiederholbar.

Lineare Blockcopolymere werden z.B. in den US-PSen 3 507 934 und 4 122 134 beschrieben. Sternförmige Blockcopolymere sind z.B. aus den US-PSen 4 086 298; 4 167 545 und 3 639 517 bekannt.

Das Eigenschaftsprofil dieser Blockcopolymeren wird wesentlich durch den Gehalt einpolymerisierter Dienmonomerer, d.h. Länge, Anordnung und Mengenverhältnis von Polydien- und Polystyrol-Blökken geprägt. Darüberhinaus spielt die Art und Weise des Übergangs zwischen unterschiedlichen Blöcken eine wichtige Rolle: Man kennt scharfe und sog. verschmierte (tapered) Übergänge, je nachdem, ob der Monomerenwechsel abrupt oder allmählich stattfindet. Im letzteren Fall tritt eine mehr oder weniger statistische Sequenzlängenverteilung auf.

Blockcopolymere mit scharf getrennten Blöcken sind bei identischem Molekulargewicht und Dienanteil weniger zäh als solche mit verschmiertem Blockübergang. Will man zu zäheren Blockcopolymeren gelangen, wird man folglich Blockübergänge mit statistischer Sequenzlängenverteilung von Dien- und Vinylaromaten im Übergangsbereich bevorzugen (vgl. US-PS 4 122 134 und EP-A-0 316 671).

Bei morphologischen Untersuchungen von Blockcopolymeren zeigt sich nun, daß bei verschmiertem Blockübergang die Sequenzlänge der reinen Dienphase gegenüber der Polystyrolphase und somit das Volumenverhältnis zugunsten der Dienphase verschoben ist. Durch die Art des Blockübergangs läßt sich also die Zähigkeit eines Polymerisats steigern, ohne daß der Diengehalt erhöht werden muß. Dies kann vorteilhaft sein, da mit wachsendem Diengehalt die Fließfähigkeit der Schmelze und die Thermostabilität der Polymeren abnimmt und die Gefahr der Vernetzung der Dienphase zunimmt. Bei Spritzguß- und Extrusionsverarbeitung macht sich die Vernetzung durch sog. Stippen und Trübungen im Polymerisat bemerkbar.

Die Erzielung verschmierter Blockübergänge durch gesteuerten Wechsel der Monomerenzugabe ist nun technisch aufwendig und führt zu einer längeren Reaktionsdauer bzw. geringerer Raum-Zeit-Ausbeute, was die Herstellungskosten erhöht. Im Grenzfall, der kontinuierlich gesteuerten Zugabe (vgl. US-PS 4 346 198 und 4 248 984) nimmt die Umsetzungsdauer wegen der ungünstigen Lage der Copolymerisationsparameter von Vinylaromaten und Dienen extrem zu und man gewinnt nur Polymere mit inhomogener Verteilung der Dien- und Vinylaromaten-Einheiten im Bereich des Blockübergangs, was sich wie eine Vermehrung der Zahl der Übergänge auswirkt. Deutlich wird dies durch eine niedrige Glastemperatur (T_{g} unterhalb von -50°C, vgl. US-PS 4 346 198, Beispiel 1) und schlechte Verarbeitungseigenschaften.

Besonders Materialien mit einem Dien-Gehalt von über 35 Gew.%, die aufgrund ihres Eigenschaftsprofils (Zähigkeit, Transparenz, Gasdurchlässigkeit) für medizintechnische Anwendungen wie Infusionsschläuche, Infusionstropfkammern und Dehnfolien geeignet wären, sind nur sehr schwierig durch Profilextrusion, Spritzguß oder Schlauchfolienextrusion zu verarbeiten; sie sind auch trotz Stabilisierung mit Antioxidantien und Radikalfängern thermisch sehr empfindlich und neigen zur Klebrigkeit, so daß man sich aufwendig mit Additiven behelfen muß. Das sog. Blocken (Verkleben von Folien und Schläuchen auf der Rolle) und schlechte Entformbarkeit können die Verarbeitung durch Spritzguß gänzlich unmöglich machen.

Die Blockcopolymerisate P1 sind dadurch ausgezeichnet, daß man in einem Vinylaromat-Dien-Blockcopolymerisat aus Blöcken, die eine Hartphase (Blocktyp S) und solchen, die eine Weichphase bilden, an die Stelle eines reinen Polydienblocks als Weichphase einen Block B/S aus Dien- und Vinylaromaten-Einheiten treten läßt, der statistischen Aufbau besitzt. Der Aufbau kann dabei entlang der Kette im statistischen Mittel homogen oder inhomogen sein.

Man erhält ein solches erfindungsgemäßes kautschukelastisches Blockcopolymerisat dadurch, daß im Rahmen der vorstehenden Parameter die Weichphase aus einen statistischen Copolymerisat eines Vinylaromaten mit einem Dien gebildet wird; statistische Copolymerisate von Vinylaromaten und Dienen erhält man durch Polymerisation in Gegenwart eines polaren Cosolvens.

Ein erfindungsgemäßes Blockcopolymerisat kann z.B. durch eine der allgemeinen Formeln 1 bis 11 dargestellt werden:

(1) (S-B/S)ₙ;

(2) (S-B/S)ᵣ-S;

(3) B/S-(S-B/S)ₙ;

(4) X-[(S-B/S)ₙ]ₘ+1;

(5) X-[(B/S-S)ₙ]ₘ+1;

(6) X- [(S-B/S)ₙ-S]ₘ+1;

(7) X-[(B/S-S)ₙ-B/S]ₘ+1;

(8) Y-[(S-B/S)ₙ]ₘ+1;

(9) Y-[(B/S-S)ₙ]ₘ+1;

(10) Y-[(S-B/S)ₙ-S]ₘ+1;

(11) Y-[(B/S-S)ₙ-B/S]ₘ+1;

wobei
- S: für einen vinylaromatischen Block,
- B/S: für die Weichphase aus einem statistisch aus Dien- und vinylaromatischen Einheiten aufgebauten Block steht,
- X: den Rest eines (m+1)-funktionellen Initiators,
- Y: den Rest eines (m+1)-funktionellen Kopplungsmittels und
- m, n: natürliche Zahlen von 1 bis 10 bedeuten, mit der Maßgabe, daß in den Formeln (1), (3), (4) und (8) n mindestens 2 ist.

Bevorzugt ist ein Blockcopolymerisat einer der allgemeinen Formeln S-B/S-S, X-[-B/S-S]₂ und Y-[-B/S-S]₂ (Bedeutung der Abkürzungen wie vorstehend) und besonders bevorzugt ein Blockcopolymerisat, dessen Weichphase unterteilt ist in Blöcke

(12) (B/S)₁-(B/S)₂;

(13) (B/S)₁-(B/S)₂-(B/S)₁;

(14) (B/S)₁-(B/S)₂-(B/S)₃;

wobei die Indices 1,2,3 für unterschiedliche Strukturen in dem Sinne stehen, daß das Vinylaromat/Dien-Verhältnis in den einzelnen Blöcken B/S unterschiedlich ist oder sich innerhalb eines Blocks in den Grenzen (B/S)₁(B/S)₂ kontinuierlich ändert, wobei die Glasübergangstemperatur Tg jedes Teilblocks unter 25°C liegt.

Ein Blockcopolymerisat, das mehrere Blöcke B/S und/oder S mit unterschiedlicher Molmasse je Molekül aufweist, ist ebenfalls bevorzugt.

Bevorzugt als vinylaromatische Verbindung im Sinne der Erfindung ist Styrol und ferner α-Methylstyrol und Vinyltoluol oder Diphenylethylen sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination; bei Verwendung der technischen äquivalente von Styrol und Butadien muß man ggf. die Angaben entsprechend umrechnen.

Vorzugsweise wird aus 75 - 30 Gew.-% Styrol und 25 - 70 Gew.-% Butadien aufgebaut. Besonders bevorzugt hat ein Weichblock einen Butadienanteil zwischen 35 und 70 % und einen Styrolanteil zwischen 65 und 30 %.

Der Gewichtsanteil des Diens im gesamten Blockcopolymer liegt im Falle der Monomerkombination Styrol/ Butadien bei 15 - 65 Gew.-%, derjenige der vinylaromatischen Komponente entsprechend bei 85 - 35 Gew.-%. Besonders bevorzugt sind Butadien-Styrol-Blockcopolymere mit einer Monomerzusammensetzung aus 25 - 60 Gew.% Dien und 75 - 40 Gew.% an vinylaromatischer Verbindung.

Die Blockcopolymeren P1) sind durch anionische Polymerisation in einem unpolaren Lösungsmittel unter Zusatz eines polaren Cosolvens erhältlich. Es besteht dabei die Vorstellung, daß das Cosolvens gegenüber dem Metallkation als Lewis-Base wirkt. Als Lösungsmittel werden bevorzugt aliphatische Kohlenwasserstoffe wie Cyclohexan oder Methylcyclohexan verwendet. Als Lewis-Basen werden polare aprotische Verbindungen wie Ether und tertiäre Amine bevorzugt. Beispiele für besonders effektive Ether sind Tetrahydrofuran und aliphatische Polyether wie Diethylenglycoldimethylether. Als tert. Amine sind Tributylamin und Pyridin zu nennen. Das polare Cosolvens wird dem unpolaren Lösungsmittel in einer geringen Menge, z.B. von 0.5 - 5 Vol.% zugesetzt. Besonders bevorzugt ist Tetrahydrofuran in einer Menge von 0.1 - 0.3 Vol -%. Erfahrungsgemäß kommt man mit einer Menge von etwa 0.2 Vol.-% in den meisten Fällen aus.

Durch die Dosierung und Struktur der Lewis-Base werden die Copolymerisationsparameter und der Anteil an 1,2- bzw 1,4-Verknüpfungen der Dieneinheiten bestimmt. Die erfindungsgemäßen Polymeren haben z.B. einen Anteil von 15 - 40 % an 1,2-Verknüpfungen und 85 - 60 % an 1,4-Verknüpfungen bezogen auf alle Dieneinheiten.

Die anionische Polymerisation wird mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyllithium, sek. Butyllithium und tert. Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymeren, liegt aber in der Regel im Bereich von 0.002 bis 5 Mol % , wenn man sie auf die Monomeren bezieht.

Die Polymerisationstemperatur kann zwischen 0 und 130°C betragen. Bevorzugt wird der Temperaturbereich zwischen 30 und 100°C.

Für die mechanischen Eigenschaften ist der Volumenanteil der Weichphase im Festkörper von entscheidender Bedeutung. Erfindungsgemäß liegt der Volumenanteil der aus Dien- und vinylaromatischen Sequenzen aufgebauten Weichphase bei 60 - 90, bevorzugt bei 70 - 90 und besonders bevorzugt bei 80 - 90 Vol.-%. Die aus den vinylaromatischen Monomeren entstandenen Blöcke A bilden die Hartphase, deren Volumenanteil entsprechend 10 - 40, bevorzugt 10-30 und besonders bevorzugt 10-20 Völ-% ausmacht.

Es ist darauf hinzuweisen, daß zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymeren läßt sich auch aus den eingesetzten Monomermengen berechnen, wenn man jedesmal vollständig auspolymerisieren läßt.

Im Sinne der Erfindung eindeutig definiert wird das Blockcopolymere durch den Quotienten aus dem Volumenanteil in Prozent der aus den B/S-Blöcken gebildeten Weichphase und dem Anteil an Dieneinheiten in der Weichphase, der für die Kombination Styrol/ Butadien zwischen 25 und 70 Gew.% liegt.

Durch den statischen Einbau der vinylaromatischen Verbindungen in den Weichblock des Blockcopolymeren und die Verwendung von Lewis-Basen während der Polymerisation wird die Glasübergangstemperatur (Tg) beeinflußt. Die Glasübergangstemperatur des Weichblockes beträgt vorzugsweise -50 bis +25°C, bevorzugt -50 bis +5°C.

Die Glastemperatur der Hartphase S des Blockcopolymerisats P1 liegt über +25°C, bevorzugt über +50°C.

Das Molekulargewicht des Blocks S beträgt vorzugsweise 1000 bis 200.000, insbesondere 3.000 und 80.000 [g/mol]. Innerhalb eines Moleküls können S-Blöcke unterschiedliche Molmasse haben.

Das Molekulargewicht des Blocks B/S beträgt üblicherweise von 2.000 bis 250.000 [g/mol]; bevorzugt sind Werte von 5.000 bis 150.000 [g/mol].

Auch Block B/S kann wie Block S innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiel für derartige Verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat oder -benzoat geeignet.

Bevorzugte Polymerstrukturen sind S-B/S-S, X-[-B/S-S]₂ und Y-[-B/ S-S]₂, wobei der statistische Block B/S selbst wieder in Blöcke B1/S1-B2/S2-B3/S3-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks B/S in möglichst viele Teilblöcke Bn/Sn bietet den entscheidenden Vorteil, daß auch bei einem Zusammensetzungsgradienten innerhalb eines Teilblocks Bn/Sn, wie er sich in der anionischen Polymerisation unter praktischen Bedingungen nur schwer vermeiden läßt (s.u.), sich der B/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur T_{g} absenkt und die Vernetzungsanfälligkeit des Polymeren mindert. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden B/S-Blöcke eine Restzähigkeit behält und nicht vollständig versprödet.

Die Blockcopolymeren besitzen ein dem Weich- PVC sehr ähnliches Eigenschaftsspektrum, können jedoch vollkommen frei von migrationsfähigen, niedermolekularen Weichmachern hergestellt werden. Sie zeichnen sich durch eine hohe Sauerstoffpermeation P₀ und Wasserdampfpermeation P_{W} von über 2.000 [cm³·100 µm/m²·d·bar] bzw. über 10 [g 100 µm/m²·d·bar] aus, wobei P_{O} die Sauerstoffmenge in cm³ bzw. P_{W} die Wasserstoffmenge in Gramm angibt, die durch 1 m² Folie mit einer Normdicke von 100 µm je Tag und je bar Partialdruckdifferenz hindurchtreten.

Die Polymerisation wird vorzugsweise mehrstufig durchgeführt und bei monofunktioneller Initiierung z.B. mit der Herstellung des Hartblocks S begonnen. Ein Teil der Monomeren wird im Reaktor vorgelegt und die Polymerisation durch Zugabe des Initiators gestartet. Um einen definierten, aus der Monomer- und Initiatordosierung berechenbaren Kettenaufbau zu erzielen, ist es empfehlenswert, den Prozeß bis zu einem hohen Umsatz (über 99%) zu führen, bevor die zweite Monomerzugabe erfolgt. zwingend erforderlich ist dies jedoch nicht.

Die Abfolge der Monomerzugabe richtet sich nach dem gewählten Blockaufbau. Bei monofunktioneller Initiierung wird z.B. zuerst die vinylaromatische Verbindung entweder vorgelegt oder direkt zudosiert. Danach sollten Dien und Vinylaromat möglichst gleichzeitig zugegeben werden. Durch das Mengenverhältnis von Dien zu vinylaromatischer Verbindung, die Konzentration und chemische Struktur der Lewis-Base sowie die Temperatur wird der statistische Aufbau und die Zusammensetzung des Blocks B/S bestimmt. Erfindungsgemäß nimmt das Dien relativ zur Gesamtmasse einschließlich vinylaromatischer Verbindung einen Gewichtsanteil von 25% bis 70% ein. Anschließend kann Block S durch Zugabe des Vinylaromaten anpolymerisiert werden. Stattdessen können benötigte Polymerblöcke auch durch die Kopplungsreaktion miteinander verbunden werden. Im Falle der bifunktionellen Initiierung wird zuerst der B/S-Block aufgebaut, gefolgt vom S-Block.

Die weitere Aufarbeitung erfolgt nach den üblichen Verfahren. Es empfiehlt sich, dabei in einem Rührkessel zu arbeiten und mit einem Alkohol wie Isopropanol die Carbanionen zu protonieren, vor der weiteren Aufarbeitung in üblicher weise mit CO₂/Wasser schwach sauer zu stellen, das Polymer mit einem Oxidationsinhibitor und einem Radikalfänger (handelsübliche Produkte wie Trisnonylphenylphosphit (TNPP) oder α-Tokopherol (Vitamin E) bzw. unter dem Handelsnamen Irganox 1076 oder Irganox 3052 erhältliche Produkte) zu stabilisieren, das Lösungsmittel nach den üblichen Verfahren zu entfernen, zu extrudieren und zu granulieren. Das Granulat kann wie andere Kautschuksorten mit einem Antiblockmittel wie Acrawax® , Besquare® oder Aerosil® gegen Verkleben geschützt werden.

Die erfindungsgemäßen Formmassen enthalten als wesentliche Komponente mindestens ein thermoplastisches oder duroplastisches Polymer P2), dessen Gewichtsanteil, bezogen auf das Gesamtgewicht der Formmassen bis zu 99 Gew.-% betragen kann.

Grundsätzlich zeigen sich die vorteilhaften Effekte bei den erfindungsgemäßen Mischungen bei Kunststoffen jeglicher Art. Eine Aufzählung geeigneter Thermoplaste und Duroplaste findet sich beispielsweise im Kunststoff-Taschenbuch (Hrsg. Saechtling), Auflage 1989, wo auch Bezugsquellen genannt sind. Verfahren zur Herstellung solcher thermoplastischer oder duroplastischer Kunststoffe sind dem Fachmann an sich bekannt. Nachstehend seien einige bevorzugte Kunststoffarten etwas näher erläutert.

Die Mischungspartner (Komponente P2) des erfindungsgemäßen kautschukelastischen Blockcopolymerisats P1 sind z.B. teilkristalline Polymerisate, vorzugsweise ausgewählt aus teilkristallinen Polyamiden, teilaromatischen Copolyamiden, Polyolefinen, Ionomeren, Polyestern, Polyetherketonen, Polyoxyalkylenen und Polyarylensulfiden.

### Polyamide

Teilkristalline, bevorzugt lineare Polyamide wie Polyamid-6; Polyamid-6,6; Polyamid-4,6; Polyamid-6,12 und teilkristalline Copolyamide auf Basis dieser Komponenten sind geeignet. Weiter können teilkristalline Polyamide eingesetzt werden, deren Säurekomponente ganz oder teilweise aus Adipinsäure und/oder Terephthalsäure und/oder Isophthalsäure und/oder Korksäure und/ oder Sebacinsäure und/oder Acelainsäure und/oder Dodecandicarbonsäure und/oder einer Cyclohexandicarbonsäure besteht, und deren Diaminkomponente ganz oder teilweise insbesondere aus m und/oder p-Xylylendiamin und/oder Hexamethylendiamin und/oder 2,2,4- und/ oder 2,4,4-Trimethylhexamethylendiamin und/oder isophorondiamin besteht, und deren Zusammensetzungen im Prinzip bekannt sind (vgl. Encyclopedia of Polymers, Vol. 11, S. 315 ff.).

Die Molekulargewichte Mₙ (Zahlenmittel) der als Komponente P2 geeigneten Polyamide liegen bevorzugt im Bereich zwischen 5,000 und 100,000, besonders bevorzugt zwischen 10,000 und 80,000.

Geeignet sind teilkristalline lineare Polyamide z.B. mit einer relativen Viskosität von 2,2 bis 4,5 (gemessen in 96 gew.-%iger Schwefelsäure bei einer Konzentration von 1 g/100 ml bei 23°C). Bevorzugt sind Polyamide, die sich ganz oder teilweise von Lactamen mit 7 bis 13 Ringgliedern ableiten, wie Polycaprolactam, Polycapryllactam oder Polylaurinlactam.

Geeignet sind ferner Polyamide, die durch Umsetzung von Dicarbonsäuren mit einem oder mehreren Diaminen erhalten werden. Geeignete Dicarbonsäuren sind beispielsweise Alkandicarbonsäuren mit 6 bis 12, insbesondere 6 bis 10 Kohlenstoffatomen, insbesondere Adipinsäure. Geeignete Diamine sind beispielsweise Alkan- oder Cycloalkandiamine mit 4 bis 12, insbesondere 4 bis 8 Kohlenstoffatomen; Hexamethylendiamin, m-Xylylendiamin, Bis(4-aminophenyl)methan, Bis(4-aminocyclohexyl)methan oder Bis(4-aminophenyl)propan-2,2 oder deren Mischungen sind besonders geeignete Partner zur Herstellung solcher Polyamide. Es kann vorteilhaft sein, die genannten Polyamide für sich herzustellen und deren Mischungen zu verwenden.

Besondere technische Bedeutung haben Polyamid-6 (Polycaprolactam), Polyamid-6,6 (Polyhexamethylenadipinamid) und Polyamide, die zu mindestens 80 Gew.-% aus wiederkehrenden Einheiten der Formel -[-NH-(CH₂)₄-NH-CO-(CH₂)₄-CO-]- aufgebaut sind. Die zuletzt genannten Polyamide sind durch Kondensation von 1,4-Diaminobutan mit Adipinsäure erhältlich. Geeignete Herstellungsverfahren für Polyamide sind z.B. in EP-A-38 094, EP-A-38 582 und EP-A-39 524 beschrieben.

Ebenfalls geeignet sind Polyamide mit geringem Anteil, vorzugsweise bis etwa 10 Gew.-%, an anderen einkondensierbaren Bestandteilen, insbesondere anderen Amidbildnern wie beispielsweise alpha, omega-Aminosäuren oder N-Carbonsäure-anhydriden (Leuchsanhydriden) von Aminosäuren.

Nach einer bevorzugten Ausgestaltung der Erfindung enthalten die erfindungsgemäßen Formmassen als Komponente P2 ein teilaromatisches Copolyamid mit dem nachstehend beschriebenen Aufbau.

Bevorzugte teilaromatische Copolyamide P2 enthalten als Komponente P21: 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der Gesamtmenge an eingesetzten aromatischen Dicarbonsäuren kann durch Isophthalsäure oder andere aromatische Dicarbonsäuren ersetzt werden, vorzugsweise solche, in denen die Carboxylgruppen in para-Stellung stehen.

Neben den Einheiten, die sich von Terephthalsäure und Hexamethylendiamin ableiten, enthalten die teilaromatischen Copolyamide Einheiten, die sich von ε-Caprolactam ableiten (P22) und/oder Einheiten, die sich von Adipinsäure und Hexamethylendiamin (P23) ableiten.

Der Anteil an Einheiten, die sich von ε-Caprolactam ableiten, beträgt bis zu 50 Gew. -%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von e-Caprolactam als auch Einheiten von Adipinsäure und Hexamethylendiamin enthalten; in diesem Fall beträgt der Anteil an Einheiten, die frei von aromatischen Gruppen sind, bevorzugt mindestens 10 Gew.-%, vorzugsweise mindestens 20 Gew.-%. Das Verhältnis der Einheiten, die sich von e-Caprolactam und von Adipinsäure und Hexamethylendiamin ableiten, unterliegt dabei keiner besonderen Beschränkung.

Der Schmelzpunkt besonders geeigneter teilaromatischer Copolyamide liegt z.B. im Bereich von 260 bis über 300°C, wobei dieser hohe Schmelzpunkt auch mit einer hohen Glasübergangstemperatur von in der Regel mehr als 75, insbesondere mehr als 85°C verbunden ist.

Binäre Copolyamide auf der Basis von Terephthalsäure, Hexamethylendiamin und epsilon-Caprolactam weisen bei einem Gehalt von etwa 70 Gew.-% an Einheiten, die sich von Terephthalsäure und Hexamethylendiamin ableiten, einen Schmelzpunkt im Bereich von 300°C und eine Glasübergangstemperatur von mehr als 110°C auf.

Binäre Copolyamide auf der Basis von Terephthalsäure, Adipinsäure und Hexamethylendiamin erreichen bereits bei einem Gehalt von etwa 55 Gew.-% Einheiten aus Terephthalsäure und Hexamethylendiamin einen Schmelzpunkt von 300°C und mehr, wobei die Glasübergangstemperatur nicht ganz so hoch liegt wie bei binären Copolyamiden, die e-Caprolactam anstelle von Adipinsäure bzw. Adipinsäure/Hexamethylendiamin enthalten.

Geeignete teilaromatische Copolyamide können nach den in den EP-A-129 195 und EP-A-129 196 beschriebenen Verfahren hergestellt werden.

Erfindungsgemäß können als Komponente P2 ferner amorphe Polyamide verwendet werden. Basierend auf den bereits genannten Monomeren werden noch zusätzliche, häufig mit einer oder mehreren, die Kristallisation behindernden Seitengruppen versehene Monomere einkondensiert. Als Resultat erhält man ein in der Regel transparentes Polyamid.

### Polyolefine

Beispiele für Polymerisate, die sich als Komponente P2 der erfindungsgemäßen Formmassen eignen, sind weiterhin teilkristalline Polyolefine, vorzugsweise Homo- und Copolymerisate von Olefinen wie Ethylen; Propylen; Buten-1; Penten-1; Hexen-1; Hepten-1; 3-Methylbuten-1; 4-Methylbuten-1; 4-Methylpenten-1 und Octen-1. Geeignete Polyolefine sind demnach z.B. Polyethylen; Polypropylen; Polybuten-1 oder Poly-4-methylpenten-1. Allgemein unterscheidet man bei Polyethylen (PE): High-Density-PE (HDPE), Low-Density-PE (LDPE) und Linear-Low-Density-PE (LLDPE).

Bevorzugt als Komponente P2 geeignete Polyolefine sind Polyethylen, Polypropylen und Poly-4-methylpenten-1, besonders bevorzugt Polyethylen und Polypropylen. Die Polyolefine können neben den Olefinen auch noch untergeordnete Mengen anderer Monomerer enthalten. Besonders geeignet sind z.B. Ethylen/Octen-Copolymere oder Ethylen/Hexen-Copolymere mit einem hohen Anteil von Octen oder Hexen (z.B. die Handelsprodukte Affinity® oder Engage® der DOW Chemical Co.)

### Ionomere

Bei einer anderen Ausführungsform der Erfindung handelt es sich bei der Komponente P2 um Ionomere. Dies sind im allgemeinen Polyolefine, wie sie vorstehend beschrieben wurden, insbesondere Polyethylen, die Monomere mit Carboxylgruppen einpolymerisiert enthalten, z.B. Acrylsäure, Methacrylsäure und ggf. weitere copolymerisierbare Monomere. Die Säuregruppen werden im allgemeinen mit Hilfe von Metallionen wie beispielsweise Na-, Ca-, Mg- und Al-Ionen in ionische, evtl. ionisch vernetzte Polyolefine umgewandelt, die sich jedoch noch thermoplastisch verarbeiten lassen (vgl. z.B. US-PSen 3,264,272; 3,404,134; 3,355,319; 4,321,337). Es ist jedoch nicht unbedingt erforderlich, die Säuregruppen enthaltenden Polyolefine mittels Metallionen umzuwandeln. Auch freie Säuregruppen enthaltende Polyolefine, die dann im allgemeinen einen kautschukartigen Charakter besitzen und teilweise noch weitere copolymerisierbare Monomere enthalten, z.B. (Meth)acrylate, sind als erfindungsgemäße Komponente P2 geeignet.

### Polyester

Daneben können als Komponente P2 auch Polyester, vorzugsweise aromatisch-aliphatische Polyester eingesetzt werden. Beispiele sind Polyalkylenterephthalate, z.B. auf Basis von Ethylenglykol, Propandiol-1,3, Butandiol-1,4, Hexandiol-1,6 und 1,4-Bis-hydroxymethylcyclohexan, sowie Polyalkylennaphthalate wie Polyethylen- oder Polybutylennaphthalat. Vorzugsweise werden Polyethylenterephthalat, Polybutylenterephthalat und Copolymere aus Cyclohexan-1,4-dimethanol, Ethylenglykol und Terephthalsäure eingesetzt. Insbesondere wird Polybutylenterephthalat verwendet.

Das Molekulargewicht (Gewichtsmittel, M_{w}) geeigneter Polyalkylenterephthalate liegt im allgemeinen zwischen 10,000 und 500,000, bevorzugt zwischen 10,000 und 80,000. Die Herstellung, z.B. durch Umesterung ist z.B. in den US-PSen 2,647,885; 2,643,989; 2,534,028 beschrieben.

### Polyetherketone

Als Komponente P2 können weiterhin aromatische Polyetherketone eingesetzt werden, wie sie z.B. beschrieben sind in der GB-PS 1 078 234, der US-PS 4,010,147, der EP-A-135 938 und in der Publikation von C. K. Sham et. al., Polymer 29/6, 1016-1020 (1988). Diese Polyetherketone können erhalten werden, indem man Bisphenole mit Bis(halogenaryl)ketonen in polaren aprotischen Lösungsmitteln in Gegenwart von Alkalicarbonaten, z.B. Lithiumcarbonat, umsetzt. Ein typisches derartiges Umsetzungsprodukt ist z.B. das aus Hydrochinon und 4,4'-Difluorbenzophenon gebildete Produkt.

### Polyoxyalkylene

Weiter können als Komponente P2 der erfindungsgemäßen Formmassen Polyoxymethylene eingesetzt werden, d.h. Polyoxyalkylene, die mindestens 50 mol-% wiederkehrende Einheiten -CH₂O- in der Polymerhauptkette aufweisen. Die Herstellung dieser Verbindungen ist allgemein bekannt: Die Homopolymeren werden im allgemeinen durch Polymerisation von Formaldehyd oder Trioxan in Gegenwart von geeigneten Katalysatoren hergestellt. Bevorzugt werden Oxymethylencopolymere, die neben den wiederkehrenden Einheiten -CH₂O-noch bis zu 50, vorzugsweise 0,1 bis 20 und insbesondere 0,3 bis 10 mol-% an wiederkehrenden Einheiten der Struktur (I)

-(̵-O-C(R¹,R²)-C(R³,R⁴)-(R⁵)ₙ-)̵- (I)

enthalten, wobei R¹ bis R⁴ unabhängig voneinander ein Wasserstoffatom oder eine C₁-C₄-Alkylgruppe mit 1-4 C-Atomen und R⁵ eine -CH₂-, -CH₂O-, eine durch C₁-C₄-Alkyl oder C₁-C₄-Haloalkylsubstituierte Methylengruppe oder eine entsprechende Oxymethylengruppe darstellen und n den Wert 0 oder einen ganzzahligen Wert im Bereich von 1-3 annehmen kann.

Als modifizierende Bausteine für die vorstehend erläuterten Polyoxyalkylene sind beispielsweise cyclische Ether geeignet wie Ethylenoxid, 1,2-Propylenoxid, 1,2-Butylenoxid, 1,3-Butylenoxid, 1,3-Dioxan, 1,3-Dioxolan und 1,3-Dioxepan sowie lineare Oligo- oder Polyformale wie Polydioxolan oder Polydioxepan.

Als Komponente P2 geeignet sind auch Oxymethylenterpolymerisate, die beispielsweise durch Umsetzung von Trioxan, einem der vorstehend beschriebenen cyclischen Ether und einem dritten Monomeren, vorzugsweise einem alpha-omega-Diepoxid der Formel (III) 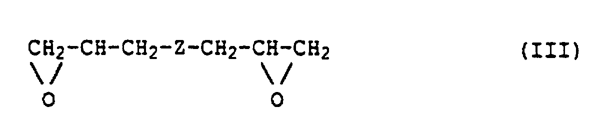 hergestellt werden, wobei Z eine Einfachbindung oder einen der zweiwertigen Reste -O-, -(̵C₁-C₈-Alkylen)̵- oder -(̵C₃-C₈-Cycloalkylen)̵- bedeutet.

Bevorzugte Monomere dieser Art sind Ethylendiglycid, Diglycidether und Diglycidylformal, Dioxan oder Trioxan im Molverhältnis 2:1 sowie Diether aus 2 Mol eines Glycidylrestes und 1 Mol eines aliphatischen Diols mit 2-8 C-Atomen wie beispielsweise die Diglycidether von Ethylenglykol, 1,2-Propandiol, 1,4-Butandiol, Cyclobutan-1,3-diol und Cyclohexan-1,4-diol.

Bevorzugte Oxymethylencopolymeren haben einen Schmelzpunkt von mindestens 150°C und ein Molekulargewicht (Gewichtsmittel M_{w}) im Bereich von 5,000 bis 150,000, vorzugsweise von 7,000 bis 100,000. Endgruppenstabilisierte Oxymethylenpolymerisate, die an den Kettenenden C-C-Bindungen aufweisen, werden besonders bevorzugt.

### Polyarylensulfide

Als Komponente P2 sind weiter geeignet die Polyarylensulfide, insbesondere das Polyphenylensulfid. Dessen Herstellung ist beispielsweise beschrieben in US-PS 3,354,129, 3,786,035 und EP-A-171 021.

### Polyurethane

Als Komponente P2 der erfindungsgemäßen thermoplastischen Formmassen werden auch thermoplastische Polyurethane verwendet.

Thermoplastische Polyurethane und Verfahren zu ihrer Herstellung sind bekannt und beispielsweise in der DE-A-36 28 562 beschrieben.

Geeignete thermoplastische Polyurethane können hergestellt werden z.B. durch Umsetzung von organischen, vorzugsweise aromatischen Diisocyanaten, Polyhydroxylverbindungen mit einem gewichtsgemittelten Molekulargewicht (M_{w}) von 500 bis 8,000 und.Kettenverlängerungsmitteln mit einem M_{w} von 60 bis 400.

Als organische Diisocyanate kommen beispielsweise aliphatische, cycloaliphatische und vorzugsweise aromatische Diisocyanate in Betracht. Im einzelnen seien genannt: Aliphatische Diisocyanate, wie Hexamethylendiisocyanat, cycloaliphatische Diisocyanate, wie Isophorondiisocyanat; 1,4-Cyclohexandiisocyanat; 1-Methyl-2,4-cyclohexandiisocyanat und 2,6-cyclohexandiisocyanat sowie die entsprechenden Isomerengemische; 4,4'-; 2,4'- und 2,2'-Dicyclohexylmethandiisocyanat sowie die entsprechenden Isomerengemische und vorzugsweise aromatische Diisocyanate, wie 2,4-Toluylendiisocyanat, Gemische aus 2,4- und 2,6-Toluylendiisocyanat; 4,4'-; 2,4'- und 2,2'-Diphenylmethan-diisocyanat; Gemische aus 2,4'- und 4,4'-Diphenylmethan-diisocyanat; urethanmodifizierte, flüssige 4,4'- und/oder 2,4'-Diphenylmethandiisocyanate; 4,4'-Diisocyanatodiphenylethan-1,2 und 1,5-Naphthylendiisocyanat. Vorzugsweise verwendet werden Hexamethylendiisocyanat, Isophorondiisocyanat; 1,5-Naphthylendiisocyanat, sowie Diphenylmethandiisocyanat-Isomerengemische mit einem Gehalt von mindestens 96 Gew.-% an 4,4'-Diphenylmethandiisocyanat.

Als höhermolekulare Polyhydroxylverbindungen mit Molekulargewichten von 500 bis 8,000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den oben genannten Molekulargewichten. Die Polyhydroxylverbindungen müssen zumindest überwiegend linear, d. h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül umsetzt, das zwei aktive Wasserstoffatome gebunden enthält. Als Alkylenoxide seien z.B. genannt: Ethylenoxid, 1,2- Propylenoxid, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht:
Wasser, Aminoalkohole wie N-Alkyl-Diethanolamine (beispielsweise N-Methyldiethanolamin) und Diole, wie Ethylenglykol, 1,3-Propylenglykol, Butandiol-1,4 und Hexandiol-1,6. Es können auch Mischungen von Startermolekülen eingesetzt werden. Geeignete Polyetherole sind ferner die hydroxylgruppenhaltigen Polymerisationsprodukte des Tetrahydrofurans (Polyoxytetramethylenglykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylenglykole.

Solche Polyetherole können erhalten werden, indem man z.B. an ein Startermolekül zunächst Propylenoxid-1,2 und daran anschließend Ethylenoxid polymerisiert oder zunächst das gesamte Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid und dann den Rest des Ethylenoxids an das Startermolekül anpolymerisiert.

Die für die Erfindung wichtigsten linearen Polyetherole besitzen ein Molekulargewicht M_{w} von 500 bis 8,000, vorzugsweise 600 bis 6,000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol; Diethylenglykol; Butandiol-1,4; Pentandiol-1,5; Hexandiol-1,6; Decandiol-1,10; 2,2-Dimethylpropandiol-1,3; Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von omega-Hydroxycarbonsäuren, beispielsweise omega-Hydroxycapronsäure und vorzugsweise Polymerisationsprodukte von Lactonen, beispielsweise gegebenenfalls substituierten omega-Caprolactonen.

Als Polyesterole vorzugsweise verwendet werden Dialkylenglykolpolyadipate mit 2 bis 6 Kohlenstoffatomen im Alkylenrest, wie z.B. Ethandiolpolyadipat; 1,4-Butandiolpoly-adipat; Ethandiolbutandiol-1,4-polyadipat; 1,6-Hexandiol-neopentylglykolpolyadipat; Polycaprolacton und insbesondere 1,6-Hexandiol-1,4-butandiolpolyadipat.

Geeignete Polyesterole besitzen z.B. ein Molekulargewicht M_{w} von 500 bis 6,000, vorzugsweise von 800 bis 3,500.

Als Kettenverlängerungsmittel mit einem Molekulargewicht M_{w} von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 C-Atomen, wie z.B. Terephthalsäure-bis-ethylenglykol oder -bis-butandiol-1,4; Hydroxyalkylenether des Hydrochinons, wie z.B. 1,4-Di(ß-hydroxyethyl)hydrochinon; (cyclo)aliphatische Diamine, wie z.B. 4,4'-Diaminodicyclohexylmethan; 3,3'-Dimethyl-4,4'-diaminodicyclohexylmethan; Isophorondiamin; Ethylendiamin; 1,2-; 1,3-Propylendiamin; N-Methylpropylendiamin-1,3; N,N'-Dimethylethylendiamin und aromatische Diamine, wie z.B. 2,4- und 2,6-Toluylendiamin; 3,5-Diethyl-2,4- und -2,6-Toluylendiamin und primäre ortho-di-; tri- und/oder tetra-alkylsubstituierte 4,4'-Diaminodiphenylmethane.

Zur Einstellung von Härte und Schmelzpunkt der thermoplastischen Polyurethane können die Polyhydroxyl-(Diol-)Verbindungen und Kettenverlängerungsmittel hinsichtlich ihres molaren Verhältnissen relativ weit variiert werden. Bewährt hat sich ein molares Verhältnisse von Polyhydroxylverbindung zu Kettenverlängerungsmittel von 1:1 bis 1:12, insbesondere von 1:1,8 bis 1:6,4, wobei die Härte und der Schmelzpunkt der thermoplastischen Polyurethane mit zunehmendem Gehalt an Polyhydroxylverbindung ansteigt.

Zur Herstellung der thermoplastischen Polyurethane werden die Aufbaukomponenten in einer solchen Menge umgesetzt, daß das Äquivalenzverhältnis von NCO-Gruppen der Diisocyanate zur Summe der Hydroxylgruppen oder Hydroxyl- und Aminogruppen der Polyhydroxylverbindungen und Kettenverlängerungsmittel 1:0,85 bis 1:1,20, vorzugsweise 1:0,95 bis 1:1,05 und insbesondere 1:0,98 bis 1:1,02 beträgt.

Geeignete Katalysatoren, welche insbesondere die Reaktion zwischen den NCO-Gruppen der Diisocyanate und den Hydroxylgruppen der Polyhydroxylverbindungen und Kettenverlängerungsmittel beschleunigen, sind die bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan (DABCO) und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung eingesetzt.

### Sonstige Thermoplaste

Weiterhin als Komponente P2 geeignet sind selbstverstärkende kristalline Polyarylate (LCP's = liquid crystalline polymers), lineare Polyimide, Polybenzimidazole, Polyhydantoine, Polypyrrole, Polyphosphazene, Silicone.

### Duroplastische Polymere

Grundsätzlich können in die thermoplastischen Elastomeren P1 auch in duroplastische Werkstoffe P2 eingebaut werden, wie beispielsweise in Phenol-, Kresol-, Xylenol- und Resorcinharze, Harnstoff- und Melaminharze, Furanharze, vernetzte Polymethacrylate, ungesättigte Polyesterharze, Phenoacrylatharze, Epoxidharze, Isocyanatharze (Polyurethan-Vorprodukte) sowie sog. "Hybrid"-Präpolymere aus den vorstehend genannten Gruppen. Weiterhin als Mischungspartner P2 seien genannt: Allylesterharze; Polyurethane, z.B. halbharte RIM- (Reaction injection molding)-Teile, harte und halbharte Integralschaum-RIM-Systeme, harte und elastomere Polyurethan-Gießharze, harte bis weiche Schäume.

Die thermoplastischen Elastomeren P1 können weiterhin verwendet werden als Komponente in Prepregs (sheet molding compounds, SMC); bulk molding compounds (BMC) mit z.B. Polyester-, Phenacrylat-, Diallylphthalat- oder Siliconharz-Matrix; weiterhin in glasfaserverstärkten Matten (GFK), Halbzeugen und Fertigteilen.

### Nichtkristalline Polymerisate auf Acrylester- oder Styrolbasis

Als Komponente P2 der erfindungsgemäßen Mischung können mit besonderem Vorteil auch nicht-kristalline Copolymerisate wie Methacrylat-Acrylat-Styrol-Polymerisate, Acrylnitril-Butadien-Styrol-Polymerisate (ABS), Acrylnitril-Styrol-Acrylester-Polymerisate (ASA), Methacrylat-Butadien-Styrol-Polymerisate (MBS), schlagfestes Polystyrol (HIPS), aber auch Homopolymerisate wie Polystyrol, Polymethylmethacrylat (PMMA), Polyacrylnitril, Polymethacrylimid verwendet werden. Solche Polymerisate bestehen z.B. im Falle von ABS, ASA, MBS, aber auch im Falle von schlagfestem Polystyrol aus zwei Phasen, einer kontinuierlichen (oft als Hartphase oder Matrix bezeichnet) und einer dispersen (meistens als Kautschuk- oder Weichphase bezeichnet). Bei den einphasigen Polymeren fehlt in der Regel die disperse weiche Kautschukphase. Erfindungsgemäße Komponenten P2 sind somit einphasige Polymere, bestehend nur aus Hartphase (wie z.B. Polystyrol oder PMMA), zweiphasige Polymere (z.B. ABS, ASA, MBS, schlagfestes Polystyrol), aber auch nur die Weichphasen (z.B. der in ABS, ASA, MBS, schlagfestem Polystyrol enthaltene Kautschuk) in ungepfropfter, gepfropfter, reiner oder angereicherter Form.

Erfindungsgemäße schlagfeste Polystyrole und Standard-Polystyrole, deren Herstellung, Struktur und Eigenschaften sind in der Übersichtsliteratur (A.Echte, F.Haaf, J.Hambrecht in: Angew. Chem. (Int.Ed.Engl.) 20, 344-361, (1981); sowie Kunststoffhandbuch, Band Polystyrol, Carl Hanser Verlag (1968) eingehend beschrieben. Darüber hinaus können die verwendeten schlagzähen Polystyrole gegenüber üblichem schlagzähem Polystyrol strukturell verändert sein z.B. durch die Verwendung spezieller Polybutadienkautschuke. Solche speziellen Polybutadienkautschuke haben z.B. einen gegenüber herkömmlichen Kautschuken veränderten 1,4-cis- bzw. 1,4-trans-Anteil oder ein anderes Verhältnis von 1,2- und 1,4-Verknüpfungen. Ferner können anstelle von Polybutadienkautschuk auch andere Dienkautschuke sowie Elastomere von der Art des Ethylen-Propylen-Dien-Copolymer (EPDM-Kautschuk) sowie hydrierte Dienkautschuke eingesetzt werden. Geeignetes Standard-Polystyrol kann sowohl nach dem Verfahren der anionischen wie der üblicheren radikalischen Polymerisation hergestellt werden. Die durch das Polymerisationsverfahren beeinflußbare Uneinheitlichkeit des Polymerisats ist dabei von untergeordneter Bedeutung. Bevorzugt werden Standard-Polystyrol und schlagzähes Polystyrol, deren toluollöslicher Anteil ein mittleres Molekulargewicht M_{w} von 50,000 bis 500,000 g/mol aufweist und die gegebenenfalls noch mit Additiven, wie beispielsweise Mineralöl, Stabilisator, Antistatika, Flammschutzmittel oder Wachsen ausgerüstet sind.

Geeignete Monomere zur Bildung der Hartphase können beispielsweise aus den im folgenden aufgeführten Monomeren ausgewählt sein: Styrol und seine substituierten Derivate, wie z.B. alpha-Methylstyrol, 4-Methylstyrol, 3,4-Dimethylstyrol, 4-tert.-Butylstyrol, 2- und 4-Divinylbenzol und 4-Methyl-alpha-methylstyrol. Technisch geeignet wären auch halogenierte Styrole wie alpha-Chlorstyrol, 4-Chlorstyrol, 2,4-Dichlorstyrol, und 4-Chlor-alpha-methylstyrol, die jedoch aus praktischen Gründen weniger infrage kommen. Bevorzugt sind Styrol und alpha-Methylstyrol.

Unter Acryl- und Methacrylverbindungen sind Monomere zu verstehen wie z.B. Acrylnitril, Methacrylnitril, Acryl- und Methacrylsäure, Methylacrylat, Ethylacrylat, n- und Isopropylacrylat, n- und Isobutylacrylat, t-Butylacrylat, 2-Ethylhexylacrylat, Methylmethacrylat, Ethylmethacrylat, n- und Isopropylmethacrylat, n- und Isobutylmethacrylat, t-Butylmethacrylat, Cyclohexylmethacrylat, Isobornylmethacrylat, Maleinsäureanhydrid und dessen Derivate, wie Maleinsäureester, Maleinsäurediester und Maleinimid, z.B. Alkyl- und Acrylmaleinimide, wie beispielsweise Methyl- oder Phenylmaleinimid, bevorzugt Acrylnitril, Methylmethacrylat, Maleinsäureanhydrid und Phenylmaleinimid.

Beispiele für geeignete Homo- bzw. Copolymerisate sind Polystyrol, Polymethylmethacrylat, Styrol-Acrylnitril-Copolymere, alpha-Methylstyrol-Acrylnitril-Copolymere, Styrol-Maleinsäureanhydrid-Copolymere, Styrol-Phenylmaleinimid-Copolymere, Styrol-Methylmethacrylat-Copolymere, Methylmethacrylat-AcrylnitrilCopolymere, Styrol-Acrylnitril-Maleinsäureanhydrid-Copolymere, Styrol-Acrylnitril-Phenylmaleinimid-Copolymere, alpha-Methylstyrol-Acrylnitril-Methylmethacrylat-Copolymere, alpha-Methylstyrol-Acrylnitril-t-Butylmethacrylat-Copolymere, Styrol-Acrylnitril-t-Butylmethacrylat-Copolymere.

### Polycarbonat

Erfindungsgemäße Komponenten P2 sind ferner beispielsweise Polycarbonat oder Mischungen aus Polycarbonat mit mehreren der nachstehend beschriebenen Pfropfcopolymeren und Thermoplasten. Bevorzugt liegt hierbei der Anteil an Polycarbonat zwischen 5 und 95 Gew.-%. Solche Mischungen sind im Handel erhältlich, beispielsweise unter der Handelsbezeichnung Bayblend® (Bayer) oder Terblend®S (BASF). Es handelt sich dabei um Mischungen eines Polycarbonats mit einem ABS- bzw. ASA-Polymerisat.

Geeignete Polycarbonate sind beispielsweise solche auf Basis von Diphenolen der allgemeinen Struktur H0-Ar-X-Ar-OH, worin Ar einen Arylenrest (Phenylen, Phenylalkyl, halogensubstituiertes Arylen) und X eine Einfachbindung, C₁-C₃-Alkylen, C₂-C₃-Alkyliden, C₃-C₆-Cycloalkyliden sowie -S- oder -SO₂- bedeuten.

Bevorzugte Diphenole der vorstehenden Struktur sind beispielsweise Hydrochinon; Resorcin; 4,4'-Dihydroxybiphenyl; 2,2-Bis(4-hydroxyphenyl)-propan; 2,4-Bis-(4-hydroxy-phenyl)-2-methylbutan; 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)cyclo-hexan. Es handelt sich um bekannte Verbindungen und die sowohl einzeln als auch im Gemisch zur Herstellung der Polycarbonate verwendet werden können.

Geeignete Polycarbonate können in bekannter Weise verzweigt sein, und zwar vorzugsweise durch den Einbau von 0,05 bis 2,0 Mol-%, bezogen auf die Summe der eingesetzten Diphenole, an mindestens trifunktionellen Verbindungen, beispielsweise solchen mit drei oder mehr phenolischen OH-Gruppen.

Als besonders geeignet haben sich Polycarbonate erwiesen, die eine relative Viskosität nᵣₑₗ von 1,10 bis 1,50, insbesondere von 1,25 bis 1,40 aufweisen. Dies entspricht einem mittleren Molekulargewicht M_{w}, von 10,000 bis 200,000, vorzugsweise von 20,000 bis 80,000.

Als Polycarbonate P2 im weiteren Sinne können auch Polycarbonat-Polysiloxan-Blockcopolymere, Polycarbonat-Polyether-Blockcopolymere und Polycarbonat-Polyester-Blockcopolymere dienen.

### Weitere Thermoplaste vom Polycarbonat-Typ

Erfindungsgemäß sind weiter als Thermoplaste P2 aromatische Polyester und Polyestercarbonate einsetzbar. Sie bestehen aus mindestens einem aromatischen Bisphenol der allgemeinen Formel (I) aus mindestens einer aromatischen Dicarbonsäure und gegebenenfalls aus Kohlensäure bzw. deren Derivate, wie Phosgen, Dialkyl- und Diarylcarbonat. Geeignete aromatische Dicarbonsäuren sind beispielsweise Orthophthalsäure; Terephthalsäure; Isophthalsäure; tert.-Butylisophthalsäure; 3,3'-Diphenyldicarbonsäure; 4,4'-Diphenyldicarbonsäure; 4,4'-Benzophenondicarbonsäure; 3,4'-Benzophenondicarbonsäure; 4,4'-Diphenyletherdicarbonsäure; 4,4'-Diphenylsulfondicarbonsäure; 2,2-Bis(4-carboxyphenyl)propan; Trimethyl-3-phenylindan-4,5-dicarbonsäure.

Ungeachtet des oben angegebenen Zieles, PVC-freie Folien zu schaffen, sei darauf hingewiesen, daß sich mit den speziellen Blockcopolymeren P1 für spezielle Zwecke auch Mischungen mit einer Hartkomponente herstellen lassen, die halogenierte Polymere wie Polyvinylidenchlorid oder Polyvinylchlorid (PVC) enthält. PVC wird bevorzugt modifiziert eingesetzt. Zur Modifizierung werden niedermolekulare Weichmacher (z.B. Dioctylphthalat, Dioctyladipat) und/oder polymere Verbindungen eingesetzt. Mischungen von PVC mit Weichmachern enthalten in der Regel noch Verarbeitungsstabilisatoren.

Ohne Weichmacher verarbeitbares PVC wird bevorzugt durch (Suspensions-)Pfropfpolymerisation von Vinylchlorid auf einen Elastomer hergestellt. Der Elastomer kann aus Polybutadien- und/oder Polyacrylatkautschuk bestehen.

Weiterhin können eingesetzt werden: Chloriertes Polyethylen; chloriertes Polypropylen; Polyisobutylen; Polyvinylacetat; Polyvinylalkohol; Polyvinylether; Polymethylpenten; Polytetrafluorethylen; Tetrafluorethylen-Perfluorpropylen-Copolymerisate; Copolymerisate von Tetrafluorethylen und Perfluoralkylvinylether; Ethylen-Tetrafluorethylen-Copolymerisate; Polyvinylidenfluorid; Polyvinylfluorid; Polychlortrifluorethylen; Ethylen-Chlortrifluorethylen-Copolymere.

### Cellulosederivate

Für P2 geeignet sind ferner Cellulose-Abkömmlinge wie Celluloseacetat; Cellulosepropionat; Celluloseacetobutyrat.

### Polyphenylenether

Geeignet als Komponente P2 sind die Polyphenylenether mit dem bekannten Strukturbaustein -[-O-C₆H₄(CH₃)₂-]ₙ-; sie werden bevorzugt durch oxidative Polymerisation unter Kupferkatalyse hergestellt, oder aber auch durch Halogensubstitutionsreaktionen aus den entsprechenden 2,6-Dimethyl-4-halogenphenolen. Sie sind homogen mischbar mit Polystyrol und sehr gut bis homogen mischbar mit den erfindungsgemäßen thermoplastischen Elastomeren. Sie können unmodifiziert oder modifiziert (z.B. mit schlagfestem Polystyrol und/oder Styrol-Butadien-Blockkautschuken) eingesetzt werden. Als Komponente P2 können natürlich auch Polymere Verwendung finden, die der Komponente P1 strukturell ähnlich sind. Beispielsweise können dies lineare und/oder sternförmige Styrol-Butadien-Blockcopolymerisat-Werkstoffe wie Styrolux® (BASF), K-Resin® (Phillips Petroleum) oder Finaclear® (Petrofina) sein.

Als geeignet haben sich auch solche Polymere erwiesen, die, einen besonders langen Block A (in der Regel Polystyrolblock A) besitzen und damit als eine Art "Verträglichkeitsvermittler" zwischen Komponente P1 und z.B. den oben genannten linearen und/oder sternförmigen Styrol-Butadien-Blockcopolymerisat-Werkstoffen, Polystyrolen (glasklar oder schlagfest), etc. dienen können.

Als Weichphase können die einschlägig üblichen Kautschuke Verwendung finden. Es können beispielsweise Naturkautschuk, Epichlorhydrin-Kautschuke, Ethylen-Vinylacetat-Kautschuke, Polyethylenchlorsulfonkautschuke, Siliconkautschuke, Polyetherkautschuke, Dienkautschuke, hydrierte Dienkautschuke, Polyalkenamer-Kautschuke, Acrylatkautschuke, Ethylen-Propylen-Kautschuke, Ethylen-Propylen-Dien-Kautschuke, Butylkautschuke und Fluorkautschuke verwendet werden. Bevorzugt wird Acrylatkautschuk, Ethylen-Propylen-(EP-)-Kautschuk, Ethylen-Propylen-Dien (EPDM-)-Kautschuk, insbesondere Butadien-Isopren-Kautschuk, Dienkautschuk oder Siliconkautschuk eingesetzt.

Bei den Acrylatkautschuken handelt es sich i.a. um Alkylacrylat-Kautschuke aus einem oder mehreren C₄-C₈-Alkylacrylaten, wobei bevorzugt mindestens teilweise Butyl-, Hexyl-, Octyl- oder 2-Ethylhexylacrylat verwendet worden sind. Diese Alkylacrylat-Kautschuke können bis zu 30 Gew.-% harte Polymere bildende Monomere wie Vinylacetat, (Meth)acrylnitril, Styrol, substituiertes Styrol, Methylmethacrylat, Vinylether einpolymerisiert enthalten. Die Acrylatkautschuke enthalten weiterhin bis zu 10 Gew.-%, vorzugsweise 1 bis 5 Gew.-% an vernetzend wirkenden, polyfunktionellen Monomeren (Vernetzungsmonomere). Beispiele hierfür sind Monomere, die zwei oder mehr zur Copolymerisation befähigte Doppelbindungen enthalten.

Dien-Kautschuke sind beispielsweise Homopolymerisate von konjugierten Dienen mit 4 bis 8 Kohlenstoffatomen wie Butadien, Isopren, Piperylen und Chloropren, Copolymerisate solcher Diene untereinander und Copolymerisate solcher Diene mit Styrol-, Acryl- oder Methacrylverbindungen (z.B. Acrylnitril, Methacrylnitril, Acrylsäure, Methacrylsäure, Acrylsäurebutylester, Acrylsäureethylhexylester und Methylmethacrylat). Besonders bevorzugte Dien-Kautschuke sind handelsübliche Butadien-, Butadien-Styrol-, Butadien-Methylmethacrylat-, Butadien-Acrylsäurebutylester- und Butadien-Acrylnitril-Kautschuke (z.B. Cariflex® (Shell); Finaprene® (Petrofina); Tufprene® (Asahi); Exxellor® (Exxon); Europrene® (Enichem) etc. Die vorstehende Aufzählung und Reihenfolge der genannten Produkte ist willkürlich; die Firmenbezeichnungen sind abgekürzt).

Geeignete Siliconkautschuke können z.B. vernetzte Siliconkautschuke aus Einheiten der allgemeinen Formeln R₂SiO, RSiO_{3/2}, R₃SiO_{1/2} und SiO_{2/4} sein, wobei R einen einwertigen Rest darstellt. Die Menge der einzelnen Siloxaneinheiten sind dabei so bemessen, daß auf 100 Einheiten der Formel R₂SiO bis 10 Mol-Einheiten der Formel RSiO_{3/2}, bis 1,5 Mol-Einheiten R₃SiO_{1/2} und bis 3 Mol-Einheiten SiO_{2/4} vorhanden sind. R kann dabei entweder ein einwertiger gesättigter Kohlenwasserstoffrest mit 1 bis 18 C-Atomen, der Phenylrest oder Alkoxy-Rest oder eine radikalisch leicht angreifbare Gruppe wie der Vinyl- oder der Mercaptopropylrest sein. Bevorzugt ist, daß mindestens 80 % aller Reste R Methyl sind; insbesondere bevorzugt sind Kombinationen aus Methyl und Ethyl oder Phenyl.

Bei der Weichkomponente kann es sich auch um ein mehrstufig aufgebautes Polymerisat handeln (sog. "Kern/Schale-Aufbau", "core/ shell morphology"). Beispielsweise kann ein kautschukelastischer Kern (Glastemperatur T_{G} <0°C) von einer "harten" Schale (Polymere mit T_{G} >0°C) oder umgekehrt umhüllt sein.

Die erfindungsgemäßen Komponenten P1 und P2 sind in praktisch jedem beliebigen Mischungsverhältnis herstellbar, z.B. von 0,1 bis 99,9 Gew.-% A, bevorzugt 10 bis 90 Gew.-% P1 und 0,1 bis 99,9 Gew.-% B, bevorzugt 10 bis 90 Gew.-% B.

### Komponente P3

Als Komponente P3) können die erfindungsgemäßen Polymermischungen weitere Zusatzstoffe und Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Keimbildungsmittel, Weichmacher usw. enthalten, deren Anteil in der Regel nicht mehr als 70 Gew.-% bevorzugt nicht mehr als 40 Gew.-% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern , Glasfasern, amorphe Kieselsäure, Asbest, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bevorzugt bis zu 35 Gew.-%.

Als Keimbildungsmittel können z.B. Talkum, Calciumfluorid, Natriumphenylphosphinat, Aluminiumoxid, Siliciumdioxid und Nylon 22 eingesetzt werden.

Gleit- und Entformungsmittel, welche in der Regel in Mengen bis zu 1 Gew.-% eingesetzt werden können, sind z.B. langkettige Fettsäuren wie Stearinsäure oder Behensäure, deren Salze (z.B. Ca- oder Zn-Stearat) oder Ester (z.B. Stearylstearat oder Pentaerythrittetrastearat) sowie Amidderivate (z.B. Ethylenbisstearylamid). Zur besseren Folienverarbeitung können in Mengen bis zu 0,1 Gew.-% Antiblockmittel auf mineralischer Basis den erfindungsgemäßen Formmassen zugesetzt werden. Als Beispiele seien amorphe oder kristalline Kieselsäure, Calciumcarbonat oder Aluminiumsilikat genannt.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur weiteren Verbesserung der Schwerentflammbarkeit können alle für die jeweiligen Thermoplaste bekannten Flammschutzmittel zugegeben werden, insbesondere solche auf Basis von Phosphorverbindungen bzw. roter Phosphor selbst.

Als besonders bevorzugte Zusatzstoffe seien Antioxidantien, insbesondere primäre Antioxidantien z.B. vom Typ der sterisch gehinderten Phenole wie 2,6-Di-tert.-butyl-4-methylphenol genannt. Geeignete primäre Antioxidantien sind beispielsweise unter den Handelsnamen Irganox® 1076 oder Irganox® 3052 (Ciba Additives) oder entsprechender Produkte anderer Hersteller erhältlich. Naturprodukten nachgebildete Stabilisatoren wie alpha-Tokopherol sind ebenfalls gut geeignet. Die vorstehend genannten "primären" Antioxidantien werden oftmals ergänzt durch sogenannte "sekundäre" Antioxidantien, von denen hier beispielsweise die Phosphite wie Tris(nonylphenyl)phosphit genannt werden.

Außerdem können UV-Stabilisatoren eingesetzt werden, die ebenfalls handelsüblich sind. Geeignet sind z.B. Triazole, sterisch gehinderte Amine (HALS = hindered amine light stabilizer), sog. Nickel-Quencher oder die aromatischen Ketone. Geeignete Handelsprodukte sind beispielsweise unter den Handelsnamen Chimassorb® und Tinuvin® (Ciba Additives) sowie Uvinul® (BASF) erhältlich.

Weiterhin können Weichmacher und Gleitmittel, wie beispielsweise Stearinsäure, Stearate, Palmitate, Myristate, Laurate, Glycerin- mono-, di- und tristearate, Erucasäure und -amide, Mikrohartwachse, Bis(stearoylethylendiamin), Adipinsäureester und Phthalsäureester mit unterschiedlichen Kettenlängen, aliphatische und aliphatisch-aromatische Kohlenwasserstoffe (Weißöle, Paraffine), Siliconöle verwendet werden.

Andere typische Hilfsmittel sind z.B. Antistatika wie Alkylsulfonate (Hostastat®; Hoechst) oder quaternäre Ammoniumsalze (Mecostat® sowie Dehydad®; Merck), Stearoyldiethanolamin oder Kokosfettdiethanolamin; Pigmente, wie z.B. Titandioxid, Ruß, Farbpigmente und Farbstoffe. Weiterhin können Glasfasern, Kohlenstoffasern, mineralische Füllstoffe (Kreide, Dolomit, Talk etc.) und sonstige Füllstoffe enthalten sein, die für die genannten Polymere typisch sind und dem Fachmann im allgemeinen bekannt sind.

Die erfindungsgemäßen Mischungen können auf jede übliche Weise erhalten werden, z.B. durch gemeinsame Extrusion, Kalandrieren o.ä. Die Extrusion kann auf Ein- oder Doppelschneckenextrudern durchgeführt werden. Das Kalandrieren erfolgt zweckmäßigerweise zunächst auf Knetern oder Extrudern (Plastifizieren), ggf. auch auf Mischwalzen mit anschließendem eigentlichem Kalandrierprozeß ggf. unter Zusatz geeigneter Stabilisatoren. Blasformen, Spritzgießen geschieht auf üblichen Maschinen. Insbesondere Dünnfolien im Bereich von 5 bis 200 µm sind, je nach Anteil an Komponente A, sehr zäh und zeigen ein hohes Rückstellvermögen. Dünnfolien werden durch Castfilm-, Schlauchfolien-, Chill-Roll- oder andere übliche Verfahren hergestellt.

Besonders hochwertige Folien werden durch Coextrusion hergestellt. Allerdings können Coextrudate z.B. auch durch Blasformen erhalten werden. Die Coextrusion dient der Kombination von Eigenschaften. Die Anzahl der Schichten ist dabei genau wie die Anzahl der verwendeten Komponenten im Rahmen der technischen Möglichkeiten frei wählbar. Als Komponenten für die Coextrusion kommen dabei alle bereits als Mischungspartner P2 gemäß Anspruch 1 genannten Polymeren in Frage. Bevorzugt sind jedoch solche, deren Eigenschaften die des elastischen Blockcopolymerisats ergänzen. Besonders bevorzugt sind thermoplastische Elastomere. Solche Coextrusionsstrukturen können aus 2, 3 oder mehreren Schichten beliebiger Reihenfolge und beliebiger Dicke bestehen. Es können Coex-Strukturen mit oder ohne Haftvermittler hergestellt werden. Bevorzugt wird Komponente P1 pur oder in Mischung mit Komponente P2 für eine Schicht A eingesetzt und für Schicht B ein beliebiges Polymer. Beispiele für Schichtaufbauten sind:
1) Schicht A/Schicht B
2) Schicht A/Schicht B/Schicht A
3) Schicht B/Schicht A/Schicht B
4) Schicht A/Schicht B/Schicht A/Schicht B
5) Schicht B/Schicht A/Schicht B/Schicht A

Treten in einer Struktur mehrere Schichten A und B auf, so bedeutet dies nicht, daß die Zusammensetzung der jeweiligen Schichten identisch ist. Bevorzugt werden auch unterschiedlich zusammengesetzte Schichten A bzw. B (z.B. in Strukturen 4 und 5) eingesetzt.

Bevorzugt werden als Coextrusions-Schichten B teilkristalline Polymere wie Polyethylen, Polypropylen, Polyamid oder auch Ethylen-Vinylacetat-Copolymere, Ethylen-Vinylalkohol-Copolymere, Polyester wie PETG (ein Polyethylenterephthalat-Copolymer das z.B. unter der Handelsbezeichnung Kodar® 6761, Eastman Kodak erhältlich ist), Polyethylenterephthalat oder Polybutylenterephthalat eingesetzt. Technisch besonders wichtige Strukturen sind z.B die in der vorstehenden Aufzählung als Nr. 2 und Nr. 3 genannten.

Besonders bevorzugt ist ein Verbund mit dem Aufbau Polypropylen/ thermoplastisches Elastomer (P1)/Polypropylen (A/B/A-Aufbau, wobei das thermoplastische Elastomer auch als Mischung mit Thermoplasten angewendet werden kann).

Der neue Verbundwerkstoff zeichnet sich - bevorzugt als Folie und insbesondere als Breitschlitz- und Chill-Roll-Folie - durch sehr hohe Zähigkeit und einen guten Rückstelleffekt ("Memory Effekt") aus. Dieser Rückstelleffekt ist um so ausgeprägter, je geringer die Orientierung des Materials (durch hohes Aufblasverhältnis oder hohe Abzugsgeschwindigkeit) ist. Dieser Verbund eignet sich als PVC-Ersatzfolie. Bevorzugt liegt die Gesamtdicke des Verbunds bei der Breitschlitzfolie zwischen 100 und 2000 µm, bei Chill-Roll- und Schlauchfolie zwischen 5 und 200, bevorzugt zwischen 10 und 30 µm, wobei der Anteil des thermoplastischen Elastomers (P1) am gesamten Verbund z.B. 20-95, bevorzugt 40-95 und insbesondere 50-90 Gew.-% beträgt. Dabei besteht die Mittelschicht B aus einer Mischung von thermoplastischem Elastomer (P1) mit bis zu 80 Gew.-%, bevorzugt bis zu 50 Gew.-%, besonders bevorzugt bis zu 30 Gew.-% des thermoplastischen Polymeren (P2). Ähnliche Eigenschaften wie oben beschrieben lassen sich auch mit dem Verbund Polyethylen-thermoplastisches Elastomer-Polyethylen erzielen, wobei die obengenannten Eigenschaften und Mengenanteile gelten.

### Weitere Verbunde sind etwa:

Polypropylen/thermoplastisches Elastomer/Polyethylen;
Polyamid/thermoplastisches Elastomer/Polyethylen
Polyamid/thermoplastisches Elastomer/Polypropylen
PETG/thermoplastisches Elastomer/PETG
Thermoplastisches Elastomer/EVA-Copolymer/Polyethylen
sowie jeweils infragekommende Mischungen mit Thermoplasten.

Alle vorstehend beschriebenen Verbunde können mit oder ohne Haftvermittler hergestellt werden. Werden Mischungen mit Thermoplasten eingesetzt, so haben sich insbesondere Glasklar-Polystyrol, Schlagfest-Polystyrol, Styrol-Butadien-Blockcopolymere einzeln oder in Mischung als geeignete Thermoplasten erwiesen.

Die erfindungsgemäßen Mischungen (Formmassen) dienen zur Herstellung von Folien jeglicher Art wie beispielsweise Chill-Roll-, Coextrusions-, Schlauchfolien, Breitschlitzfolien, Kalanderfolien, Automobil-Crash-pad-Folien, Kaschierfolien, elastischen Folienstücken für Windeln, Spielwaren, Latex-Ersatzprodukten usw.

Insbesondere seien genannt: Folien für die Verpackung (Fleisch-, Obst-, Gemüse-Verpackung, Umschrumpffolien, Sleeves).

Diese können nach geeigneten Verfahren wie Mono- und Coextrusion von Schlauchfolien, Chill-Roll-Folien, Breitschlitzfolien; durch Kalandrieren, Spritzgießen, Blasformen und weitere hier nicht genannte geeignete Verfahren hergestellt werden.

### Beispiele

### Komponente P1

Die Herstellung der Komponenten P 1-1 bis P1-3 erfolgte gemäß DE-A 44 20 952:

Ein beheiz- und kühlbarer 50 1-Edelstahlreaktor, der mit einem Kreuzbalkenrührer ausgerüstet war, wurde durch Spülen mit Stickstoff, auskochen mit einer Lösung von sec-Butyllithium und 1,1-Diphenylethylen in Cyclohexan (Molverhältnis 1:1) und trocknen vorbereitet.

Anschließend wurden 22,8 l Cyclohexan eingefüllt und 42 ml s-Butyllithium als Initiator, 65,8 ml Tetrahydrofuran und Styrol (S) und Butadien (B) in den in der nachstehenden Tabelle 1 angegebenen Mengen (g) und nach dem angegebenen Zeittaktprogramm zugesetzt. Angegeben ist auch die Polymerisationsdauer t in Minuten sowie Anfangs- und Endtemperatur T_{A} bzw. T_{E} (in °C), wobei darauf hinzuweisen ist, daß die Polymerisätionsdauer stets groß gegen die Dauer des Monomerzulaufs war.

Die Temperatur des Reaktionsgemisches wurde durch Heizung oder Kühlung des Reaktormantels gesteuert. Nach Umsetzungsende (Verbrauch der Monomeren) wurde mit Ethanol, bis zur Farblosigkeit titriert und die Mischung mit einem 1,5-fachen Überschuß an Ameisensäure sauer gestellt. Zuletzt wurden 34 g eines handelsüblichen Stabilisators 2-t-butyl-6-(3-t-butyl-2-hydroxy-5-methylbenzyl)-4-methylphenylacrylat (Irganox® 3052; Ciba-Geigy, Basel) und 82 g Trisnonylphenylphosphit zugesetzt.

Die erhaltene Polymerlösung wurde vom Lösungsmittel befreit, mit 0,5 Gew.-% eines Gleitmittels; Polyethylen-Abbauwachs mit einer Erweichungstemperatur von 95°C (mikrokristallines Hartwachs BeSquare® 195; Petrolite) versetzt, in einer Knetmaschine (Werner u. Pfleiderer; ZSK 30) entgast und granuliert.

**Tabelle 1**

| | Komponente P1 |
|---|---|
| THF (ml) | 65,8 |
| s-BuLi (ml) | 42 |
| Styrol 1 (g) | 1008 |
| T(A)/T(E) (°C) | 30/70 |
| Zeit (min) | 30 |
| Butadien 1 (g) | 1120 |
| Styrol 2 (g) | 1412 |
| T(A)/T(E) (°C) | 68/96 |
| Zeit (min) | 17 |
| Butadien 2 (g) | 1120 |
| Styrol 3 (g) | 1412 |
| T(A>/T(E> (°C) | 60/84 |
| Zeit (min) | 12 |
| Butadien 3 (g) | 1120 |
| Styrol 4 (g) | 1412 |
| T (A)/T(E) (°C) | 64/83 |
| Zeit (min) | 6 |
| Styrol 5 (g) | 1008 |
| T(A)/T(E) (°C) | 70/76 |
| Zeit (min) | 14 |
| Mn (g/mol) | 107 000 |
| Mp (g/mol) | 141 000 |
| Mw (g/mol) | 159 000 |

### Komponenten P2

- P2-1:: Schlagfestes Polystyrol mit einer VZ (23°C; 0,5 gew.-%ig in Toluol) von 73 ml/g; Polybutatiengehalt: 9 Gew.-%, Kapselteilchenmorphologie mit einer mittleren Teilchengröße von 0,3 µm
(Polystyrol 585 K, BASF AG)
- P2-2:: Ethylen/Vinylacetat-Copolymer mit 8 Gew.-% Vinylacetat; Schmelzindex UFR (190°C/2,16 kg) - 4 g/10 min.
(Lupolen® V 2910 KQ 271, BASF AG)
- P2-3:: Ethylen/Octen-Copolymer mit 12 Gew.-% Octen
Dichte: 0,920 g/ml
(Affinity® 1650, Dow Chem.)
- P2-4:: Radiales Styrol/Butadien Blockcopolymer, hergestellt gemäß EP-A2 390 019 (Komponente A1)

### Komponente P3

Als Verarbeitungshilfsmittel wurden in Beispiel 2 und 3 0,5 Gew.-% Erucasäureamid bei der Folienherstellung zugesetzt CBu.

### Folienherstellung

Die erfindungsgemäßen Folien sowie die zu Vergleichszwecken hergestellten Folien wurden nach dem "chill roll"-Verfahren auf einem Extruder hergestellt (Battenfeld: Schneckendurchmesser 45 mm, Schneckenlänge 25 D, Massetemperatur 214°C bei einer Walzentemperatur von 60°C). Dieser Extruder liefert die nachstehend mit "Schicht A" bezeichnete Schicht. Mittels Adapter wurde ein zweiter Extruder gleicher Bauart zugeschaltet, der eine Schicht B liefert. Es werden 2 Sorten von Folien hergestellt:
- Monofolien, bestehend ausschließlich aus Schicht A;
- Coextrusionsfolien mit dem Schichtaufbau A/B/A.

Die Folienstärke wurde unabhängig von der Art der Folie einheitlich auf 16 µm eingestellt.

Folgende Prüfungen wurden an den Folien durchgeführt (Tab.2) :
a) Memory-Effekt:
Ein Folienstück wurde sowohl in Längs- als auch in Querrichtung um 200 % verstreckt und sofort wieder entspannt. Anschließend wurde gemessen, welche Restverstreckung nach einer Minute verbleibt. Die angegebenen Werte sind Mittelwerte aus Werten in Längs- und Querrichtung. Folgende Bewertungsskala wurde eingeführt:

| Restverstreckung | Note |
|---|---|
| 0-10 %: | 1 |
| 11-30 %: | 2 |
| 31-60 %: | 3 |
| 61-90 %: | 4 |
| über 90 %: | 5 |

b) Transparenz:
Die Transparenz von 100 Folienlagen wurde visuell bewertet (1 = sehr gut; 5 = sehr schlecht).
c) Permeabilität:
Eine hohe Sauerstoffpermeabilität ist notwendig, um dem Hämoglobinfarbstoff von Frischfleisch seine typische rote Farbe zu erhalten. Zur Gewinnung einer entsprechenden Maßzahl für die Permeabilität wurde frisches Rindfleisch mit je einer Lage der Folien verpackt, bei + 5°C gelagert und die Zeit bestimmt, nach der die rote Farbe verschwindet.
d) Cling-Effekt: Zwei Folienstücke der Größe 50 x 100 cm wurden an ihren Rändern auf einer Fläche von 10 cm² unter einem Druck von 0,1 kg/10 cm² während fünf Sekunden zusammengepreßt. An den Rändern, die der Preßstelle entgegengesetzt liegen, wurde die Folie aufgehängt und beobachtet, ob sich die beiden Folienhälften nach einer Stunde wieder voneinander lösen. Die Bewertung unterscheidet zwischen gut (Folien bleiben zusammen; Cling-Effekt vorhanden) und schlecht (Folien trennen sich wieder).

Die Zusammensetzungen der Folienschichten und die Ergebnisse der Messungen sind der Tabelle 2 zu entnehmen.

**Tabelle 2**

| | B.1 | B.2 | B.3 | Vgl.1* | Vgl.2 | Vgl.2 |
|---|---|---|---|---|---|---|
| Schicht A | | | | | | |
| P1 | 100 | 84 | 84 | - | - | - |
| P2-1 | - | 6 | 6 | - | - | - |
| P2-2 | - | - | - | - | - | 100 |
| P2-3 | - | - | - | - | 100 | - |
| P2-4 | - | 9,5 | 9,5 | - | - | - |
| P3-1 | - | 0,5 | 0,5 | - | - | - |
| | | | | | | |
| Schicht B Komponente (P2-2) | - | - | 100 | - | 100 | - |
| Schichtdickenverteilung A/B/A [µm] | -/16/- | -/16/- | 3-10-3 | -/16/- | 3-10-3 | -/16/- |
| Gesamt-Foliendicke (µm) | 16 | 16 | 16 | 16 | 16 | 16 |
| Memory-Effekt | 1 | 1 | 3 | 2 | 4 | 5 |
| Transparenz | 1 | 4 | 4 | 1 | 2 | 3 |
| Permeabilität [Tage] | 5 | 4-5 | 3 | 4 | 2 | 2 |
| Cling-Effekt | gut | schl | schl | gut | schl | schl |

| | | | | | | |
|---|---|---|---|---|---|---|
| * Als Vergleich 1 wurde eine handelsübliche PVC-Folie (Firma Plastor, (H) benutzt. | | | | | | |

## Patentansprüche

1. Folie, insbesondere für die Lebensmittelverpackung, aus einer Polymermischung enthaltend
P1: 1 bis 99 Gew. % eines kautschukelastischen Blockcopolymerisats P1
das
α) mindestens zwei Blöcke S, die einpolymerisierte Einheiten eines vinylaromatischen Monomeren und eine Glastemperatur über 25°C aufweisen und
β) mindestens einen, zwischen den Blöcken S befindlichen, elastomeren Block B/S, der sowohl einpolymerisierte Einheiten eines vinylaromatischen Monomeren (S) als auch eines Diens (B) enthält, mit statistischem Aufbau und einer Glastemperatur Tg von unter 25°C,
enthält
und wobei die im Festkörper aus den Blöcken S gebildete Hartphase 10 - 40 Vol.-%, und die aus den Blöcken B/S gebildete Weichphase 60-90 Vol.-% betragen,
P2: 1 bis 99 Gew.-% eines thermoplastisch verarbeitbaren und/ oder duroplastischen Polymeren P2.
P3: bis 70 Gew.-% weiterer Zusatzstoffe und Verarbeitungshilfsmittel, wobei die Summe der Gewichtsprozente der Komponenten P1 bis P3 100 % ergibt.

2. Folie nach Anspruch 1, in welcher die T_{g} der Hartphase S des Blockcopolymerisats P1 über 50°C und die T_{g} der Weichphase B/S im Bereich -50°C bis 5°C liegt.

3. Folie nach Anspruch 1, wobei das vinylaromatische Monomere des Blockcopolymerisats P1 ausgewählt ist aus Styrol, alpha-Methylstyrol, Vinyltoluol und Diphenylethylen und das Dien aus Butadien und Isopren.

4. Folie nach den Ansprüchen 1 bis 3, enthaltend ein Blockcopolymerisat P1, dargestellt durch eine oder mehrere der allgemeinen Formeln (1) bis (11)
(1) (S-B/S)ₙ;
(2) (S-B/S)ₙ-S;
(3) B/S-(S-B/S)ₙ;
(4) X-[(S-B/S)ₙ]ₘ₊₁;
(5) X-[(B/S-S)ₙ]ₘ₊₁;
(6) X-[(S-B/S)ₙ-S]ₘ₊₁;
(7) X-[(B/S-S)ₙ-B/S]ₘ₊₁;
(8) Y-[(S-B/S)ₙ]ₘ₊₁;
(9) Y-[(B/S-S)ₙ]ₘ₊₁;
(10) Y-[(S-B/S)ₙ-S]ₘ₊₁;
(11) Y-[(B/S-S)ₙ-B/S]ₘ₊₁;
wobei S für einen vinylaromatischen Block
B/S für einen Block steht, welcher statistisch aus Dien- und vinylaromatischen Einheiten aufgebaut ist,
X den Rest eines (m+1)-funktionellen Initiators,
Y den Rest eines (m+1)-funktionellen Kopplungsmittels
m, n natürliche Zahlen von 1 bis 10 bedeuten, mit der Maßgabe, daß in den Formeln (1), (3), (4) und (8) n mindestens 2 ist.

5. Folie nach den Ansprüchen 1 bis 4, enthaltend ein Blockcopolymerisat mit einer der allgemeinen Formeln S-B/S-S, X-[-B/S-S]₂ und Y-[-B/S-S]₂.

6. Folie nach den Ansprüchen 1 bis 5, enthaltend ein Blockcopolymerisat, dessen Weichphase unterteilt ist in Blöcke
(12) (B/S)₁-(B/S)₂,
(13) (B/S)₁-(B/S)₂-(B/S)₁
oder
(14) (B/S)₁-(B/S)₂-(B/S)₃,
wobei die Indices 1, 2, 3 unterschiedliche Strukturen in dem Sinne bedeuten, daß das Vinylaromat/Dien-(S/B)-Verhältnis in den einzelnen Blöcken B/S unterschiedlich ist oder sich innerhalb eines Blocks in den Grenzen (B/S)₁-(B/S)₂ kontinuierlich ändert, wobei die Glasübergangstemperatur T_{g} jedes Teilblocks unter 25°C liegt.

7. Verfahren zur Herstellung einer eine Mischung gemäß den Ansprüchen 1 bis 6 enthaltenden Verpackungsfolie durch Breitschlitzextrusion.

8. Verwendung einer eine Mischung gemäß den Ansprüchen 1 bis 6 enthaltenden Folie als Verpackungsfolie.

9. Verwendung einer eine Mischung gemäß den Ansprüchen 1 bis 6 enthaltenden Folie als Lebensmittelverpackungsfolie.

10. Folienförmiges Coextrudat aus mindestens zwei Schichten beliebiger Dicke, wobei mindestens eine Schicht aus den Komponenten P1 bis P3 gemäß den Ansprüchen 1 bis 6 besteht.

11. Coextrudat nach Anspruch 10 aus mindestens zwei Schichten beliebiger Dicke, wobei mindestens eine weitere Schicht aus einem thermoplastisch verarbeitbaren Polymeren besteht.

12. Coextrudat nach Anspruch 11, enthaltend in mindestens einer Schicht als Komponente P2 Polyethylen, Polypropylen, Polyethylenterephthalat, Polybutylterephthalat oder Polyamid.

## Claims

1. A film, in particular for food packaging, made of a polymer mixture consisting of
P1: from 1 to 99% by weight of a rubber-elastic block copolymer P1
comprising
α) at least two blocks S which comprise copolymerized units of a vinylaromatic monomer and has a glass transition temperature above 25°C and
β) at least one elastomeric block B/S between the blocks S which comprises both copolymerized units of a vinylaromatic monomer (S) and a diene (B) and has a random structure and a glass transition temperature T_{g} of less than 25°C,
where the hard phase composed of the blocks S makes up 10-40% by volume of the solid and the soft phase composed of the blocks B/S makes up 60-90% by volume of the solid,
P2: from 1 to 99% by weight of a thermoplastically processable and/or thermoset polymer P2,
P3: from 0 to 70% by weight of further additives and processing aids, where the sum of the percentages by weight of the components P1 to P3 is 100%.

2. A film as claimed in claim 1 in which the T_{g} of the hard phase S of the block copolymer P1 is above 50°C and the T_{g} of the soft phase B/S is in the range from -50°C to 5°C.

3. A film as claimed in claim 1, wherein the vinylaromatic monomer of the block copolymer P1 is selected from the group consisting of styrene, alpha-methylstyrene, vinyltoluene and diphenylethylene and the diene is selected from the group consisting of butadiene and isoprene.

4. A film as claimed in any of claims 1 to 3 comprising a block copolymer P1 represented by one or more of the formulae (1) to (11)
(1) (S-B/S)ₙ;
(2) (S-B/S)ₙ-S;
(3) B/S-(S-B/S)ₙ;
(4) X-[(S-B/S)ₙ]ₘ₊₁;
(5) X-[(B/S-S)ₙ]ₘ₊₁;
(6) X-[(S-B/S)ₙ-S)ₘ₊₁;
(7) X-[(B/S-S)ₙ-B/S]ₘ₊₁;
(8) Y-[(S-B/S)ₙ]ₘ₊₁;
(9) Y-[(B/S-S)ₙ]ₘ₊₁;
(10) Y-[(S-B/S)ₙ-S]ₘ₊₁;
(11) Y-[(B/S-S)ₙ-B/S]ₘ₊₁;
where S is a vinylaromatic block,
B/S is a block which is built up randomly of diene and vinylaromatic units,
X is the radical of an (m+1)-functional initiator,
Y is the radical of an (m+1)-functional coupling agent,
m, n are natural numbers from 1 to 10 with the proviso that in the formulae (1), (3), (4) and (8) n is at least 2.

5. A film as claimed in any of claims 1 to 4 comprising a block copolymer having one of the formulae S-B/S-S, X-[-B/S-S]₂ and Y-[-B/S-S]₂.

6. A film as claimed in any of claims 1 to 5 comprising a block copolymer whose soft phase is divided into blocks
(12) (B/S)₁-(B/S)₂,
(13) (B/S)₁-(B/S)₂-(B/S)₁
or
(14) (B/S)₁-(B/S)₂-(B/S)₃,
where the indices 1, 2, 3 denote different structures in the sense that the vinylaromatic/diene (S/B) ratio in the individual blocks B/S is different or changes continuously within a block between the limits (B/S)₁-(B/S)₂, where the glass transition temperature T_{g} of each subblock is below 25°C.

7. A process for producing a packaging film comprising a mixture as claimed in any of claims 1 to 6 by slit die extrusion.

8. Use of a film comprising a mixture as claimed in any of claims 1 to 6 as packaging film.

9. Use of a film comprising a mixture as claimed in any of claims 1 to 6 as food packaging film.

10. A coextruded film comprising at least two layers of any thickness, wherein at least one layer consists of the components P1 to P3 as claimed in any of claims 1 to 6.

11. A coextruded film as claimed in claim 10 comprising at least two layers of any thickness, wherein at least one further layer comprises a thermoplastically processable polymer.

12. A coextruded film as claimed in claim 11 in which at least one layer comprises polyethylene, polypropylene, polyethylene terephthalate, polybutyl terephthalate or polyamide as component P2.

## Revendications

1. Feuille, en particulier pour l'emballage de denrées alimentaires, à base d'un mélange de polymères contenant
P1: de 1 à 99% en poids d'un copolymère bloc P1 à élasticité de caoutchouc, contenant
α) au moins deux blocs S présentant des unités copolymérisées d'un monomère vinylaromatique et d'une température de transition vitreuse supérieure à 25°C et
β) au moins un bloc élastomère B/S, se trouvant entre les blocs S, et contenant à la fois des unités copolymérisées d'un monomère vinylaromatique (S) et un diène (B), à structure statistique et d'une température de transition vitreuse Tg inférieure à 25°C,
et où la phase dure formée dans le corps solide à partir des blocs S représente de 10 à 40% en volume, et la phase molle formée à partir des blocs B/S représente de 69 à 90% en volume,
P2: de 1 à 99% en poids d'un polymère P2 pouvant être traité en thermoplastique et/ou thermodurcissable.
P3: de 0 à 70% en poids d'autres additifs et adjuvants de traitement, la somme des pourcentages en poids des composants P1 à P3 totalisant 100%.

2. Feuille selon la revendication 1, où la Tg de la phase dure S du copolymère bloc P1 est supérieure à 50°C et la Tg de la phase molle B/S est de l'ordre de -50°C à 5°C.

3. Feuille selon la revendication 1, où le monomère vinylaromatique du copolymère bloc P1 est choisi parmi le styrène, l'α-méthylstyrène, le vinyltoluène et le diphényléthène, et le diène parmi le butadiène et l'isoprène.

4. Feuille selon les revendications 1 à 3, contenant un copolymère bloc P1 représenté par une ou plusieurs des formules générales (1) à (11)
(1) (S-B/S)ₙ;
(2) (S-B/S)ₙ-S;
(3) B/S-(S-B/S)ₙ.
(4) X-[(S-B/S)ₙ]ₘ₊₁;
(5) X-[(B/S-S)ₙ]ₘ₊₁;
(6) X-[(S-B/S)ₙ-S]ₘ₊₁;
(7) X-[B/S-S)ₙ-B/S]ₘ₊₁;
(8) Y-[(S-B/S)ₙ]ₘ₊₁;
(9) Y-[(B/S-S)ₙ]ₘ₊₁;
(10) Y-[(S-B/S)ₙ-S]ₘ₊₁;
(11) Y-[B/S-S)ₙ-B]/S]ₘ₊₁;
où S représente un bloc vinylaromatique,
B/S représente un bloc statistiquement constitué d'unités de diène et d'unités vinylaromatiques,
X représente le reste d'un initiateur à (m+1) fonctionnalités,
Y représente le reste d'un agent de couplage à (m+1) fonctionnalités,
m, n sont des nombres naturels de 1 à 10, avec la condition que dans les formules (1), (3), (4) et (8), n ait une valeur d'au moins 2.

5. Feuilles selon les revendications 1 à 4, contenant un copolymère bloc de l'une des formules générales S-B/S-S, X-[-B/S-S]₂ et Y-[-B/S-S]₂.

6. Feuille selon les revendications 1 à 5, contenant un copolymère bloc dont la phase molle se subdivise en les blocs
(12) (B/S)₁-(B/S)₂,
(13) (B/S)₁-(B/S)₂-(B/S)₁
ou
(14) (B/S)₁-(B/S)₂-(B/S)₃,
où les indices 1, 2, 3 représentent des structures différentes en ce sens que la proportion vinylaromatique/diène (S/B) est différente dans les blocs individuels B/S ou varie en continu au sein d'un bloc dans les limites (B/S)₁-(B/S)₂, la température de transition vitreuse Tg de chaque bloc partiel étant inférieure à 25°C.

7. Procédé de préparation de feuilles d'emballage contenant un mélange selon les revendications 1 à 6 par extrusion à filière plate.

8. Utilisation d'une feuille contenant un mélange selon les revendications 1 à 6 comme feuille d'emballage.

9. Utilisation d'une feuille contenant un mélange selon les revendications 1 à 6 comme feuille d'emballage pour denrées alimentaires.

10. Coextrudat en forme de feuille à base d'au moins deux couches d'épaisseur quelconque, où au moins l'une des couches est constituée des composants P1 à P3 selon les revendications 1 à 6.

11. Coextrudat selon la revendication 10, constitué d'au moins deux couches d'épaisseur quelconque, où au moins une autre couche est constituée d'un polymère pouvant être traité en thermoplastique.

12. Coextrudat selon la revendication 11, contenant comme composant P2 dans au moins une couche du polyéthylène, du polypropylène, du poly(éthylène téréphtalate) du poly(butylène téréphtalate) ou du polyamide.
